# EUROPÄISCHE PATENTSCHRIFT

(11) **EP 1 146 470 B1**
(45) Veröffentlichungstag und Bekanntmachung des Hinweises auf die Patenterteilung: **23.07.2008**
(21) Anmeldenummer: 01108287.2
(22) Anmeldetag: 02.04.2001
(51) Int. Cl.: G06K 7/10, G06K 7/14

(54) **Optoelektronische Vorrichtung**
Optoelectronic device
Dispositif optoélectronique

(30) Priorität: 11.04.2000 DE 10017862
(43) Veröffentlichungstag der Anmeldung: 17.10.2001
(73) Patentinhaber: Leuze electronic GmbH + Co. KG, 73277 Owen/Teck (DE)
(72) Erfinder: Claus, Armin, 72622 Nürtingen (DE); Gseller, Rolf, 73230 Kirchheim/Teck (DE)
(74) Vertreter: Ruckh, Rainer Gerhard

(56) Entgegenhaltungen:
- EP-A- 0 479 622
- US-A- 5 019 714
- US-A- 5 231 277
- US-A- 5 637 852
- US-A- 5 637 854
- US-A- 5 975 418

## Beschreibung

Die Erfindung betrifft eine optoelektronische Vorrichtung gemäß dem Oberbegriff des Anspruchs 1.

Derartige Vorrichtungen können insbesondere als Barcodelesegeräte ausgebildet sein. Mit diesen Barcodelesegeräten sind beispielsweise Barcodes erfassbar, welche auf den Oberseiten von Gegenständen aufgebracht sind, die auf einem Förderband transportiert werden. Diese Gegenstände sind beispielsweise von Paketen und dergleichen gebildet. Das Barcodelesegerät ist dann oberhalb des Förderbandes und oberhalb der Gegenstände so angebracht, dass die Barcodes auf der Oberseite der Gegenstände erfassbar sind.

Problematisch sind jedoch derartige Anwendungsfälle, bei welchen die Orientierung von auf Objekten angebrachten Barcodes relativ zum Barcodelesegerät nicht eindeutig vorgegeben ist.

Beispielsweise sind derartige Objekte von in der Medizintechnik verwendeten Probenröhrchen gebildet, die senkrecht stehend auf Förderbändern bewegt werden.

In den Probenröhrchen befinden sich Proben von Blut, Urin, Serum oder dergleichen, die mit einem Barcode auf der Mantelfläche des Probenröhrchens gekennzeichnet sind.

Zur Identifikation der Proben werden die Barcodes von einer als Barcodelesegerät ausgebildeten optoelektronischen Vorrichtung erfasst, die seitlich zum Förderband stationär angeordnet ist.

Nachteilig hierbei ist, dass die Barcodes an einem Probenröhrchen nur dann von dem Barcodelesegerät erfasst werden können, wenn das Barcodelesegerät auf den Barcode ausgerichtet ist. Befindet sich dagegen der Barcode auf der dem Barcodelesegerät abgewandten Seite ist eine Detektion nicht möglich.

Zur Vermeidung von Fehldetektionen könnte das Probenröhrchen jeweils so gedreht werden, dass sich der Barcode auf der dem Barcodelesegerät zugewandten Seite des Probenröhrchens befindet.

Ein derartiges Drehen der Probenröhrchen würde jedoch einen unerwünscht hohen manuellen Aufwand und einen dementsprechend hohen Personaleinsatz erfordern.

Eine automatische Vorrichtung zum Drehen der Probenröhrchen würde eine zusätzliche sensorgesteuerte Vorrichtung erfordern, wodurch ein erheblicher Kostenaufwand entstünde.

Aus der US 5,975,418 (dem nächsten Stand der Technik), der US 5,231,277 und der US 5,637,852 sind Barcodescanner bekannt, die als Ablenkvorrichtungen für Sendelichtstrahlen neben einem rotierenden Polygonspiegelrad stationäre Umlenkspiegel aufweisen um so komplexe Abtastmuster zu erzeugen.

Aus der EP 0 479 622 A1 ist eine Vorrichtung zur Erfassung von Codes auf Probenröhrchen bekannt. Über Transportvorrichtungen werden die Probenröhrchen einem Barcodeleser zugeführt, der Marken auf den Proberöhrchen in einer Abtastrichtung erfasst.

Die US 5,637,854 beschreibt einen Barcodescanner, der Codes auf einer Seite von Probenröhrchen erfasst.

Die US 5,019,714 beschreibt eine Mehrfachanordnung von Laserscannem in einem Tunnel, um dort vorhandene Objekte aus verschiedenen Richtungen abtasten zu können.

Der Erfindung liegt die Aufgabe zugrunde, eine Vorrichtung der eingangs genannten Art so auszubilden, dass Marken in unterschiedlicher räumlicher Orientierung zur Vorrichtung sicher erfassbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung weist eine Ablenkeinheit auf, welcher wenigstens zwei Umlenkeinheiten nachgeordnet sind. Über die Ablenkeinheit werden die Sendelichtstrahlen periodisch innerhalb eines vorgegebenen Winkelbereichs Δα geführt. Die optoelektronische Vorrichtung ist in einem torbogenförmigen Gehäuse integriert, welches einen Erfassungsbereich seitlich und an seinem oberen Rand umschließt. Jeweils ein Austrittsfenster ist an einer Innenseite der Seitenschenkel des Torbogens angeordnet. Zur Erfassung der Marke ist das Objekt in den Erfassungsbereich einbringbar. Der Ablenkeinheit sind wenigstens zwei stationäre Umlenkeinheiten nachgeordnet. Innerhalb eines ersten Ausschnitts Δα₁ des Winkelbereichs Δα sind die Sendelichtstrahlen über die erste Umlenkeinheit durch ein erstes Austrittsfenster von einer ersten Seite auf das Objekt geführt und tasten so einen ersten Ausschnitt des Erfassungsbereichs periodisch ab. Innerhalb eines zweiten Ausschnitts Δα₂ des Winkelbereichs Δα sind die Sendelichtstrahlen über die zweite Umlenkeinheit durch das zweite Austrittsfenster geführt und tasten so einen zweiten Ausschnitt Erfassungsbereichs periodisch ab.

Das Objekt mit der darauf angeordneten Marke wird vorzugsweise mittels einer Fördereinrichtung in den Erfassungsbereich eingebracht.

Über die Umlenkeinheiten werden die Sendelichtstrahlen in verschiedenen Einfallswinkeln auf die Objektoberfläche geführt, so dass Marken in unterschiedlicher Orientierung auf der Objektoberfläche sicher erfasst werden können.

Da der Erfassungsbereich von einem dreidimensionalen Raumbereich gebildet ist, können die Marken auch auf einer im dreidimensionalen Raum verlaufenden Objektoberfläche angeordnet sein und dennoch sicher erfasst werden.

Insbesondere können die Objekte von Probenröhrchen gebildet sein, die auf einem die Fördereinrichtung bildenden Förderband transportiert werden. Dabei stehen die Probenröhrchen vorzugsweise senkrecht ausgerichtet auf dem Förderband, wobei die Barcodes in beliebigen Winkelpositionen auf der Mantelfläche der Probenröhrchen aufgebracht sein können. Vorzugsweise verlaufen die Längsachsen der Barcodes in Längsrichtung der Probenröhrchen. Da die Sendelichtstrahlen in verschiedenen Einfallswinkeln über den gesamten Umfang der Probenröhrchen auf deren Mantelfläche geführt sind und diese vorzugsweise in Längsrichtung abtasten, kann der Barcode in beliebigen Winkelpositionen sicher erfasst werden, ohne dass die Probenröhrchen ausgerichtet werden müssen.

Die Erfindung wird im nachstehenden- anhand der Zeichnungen erläutert. Es zeigen:
- Figur 1:: Prinzipaufbau einer als Barcodelesegerät ausgebildeten optoelektronischen Vorrichtung.
- Figur 2:: Anordnung der erfindungsgemäßen optoelektronischen Vorrichtung zur Erfassung von Marken an auf einer Fördereinrichtung transportierten Objekten.
- Figur 3:: Längsschnitt durch die optoelektronische Vorrichtung gemäß Figur 2.
- Figur 4:: Querschnitt durch die optoelektronische Vorrichtung gemäß Figur 2.

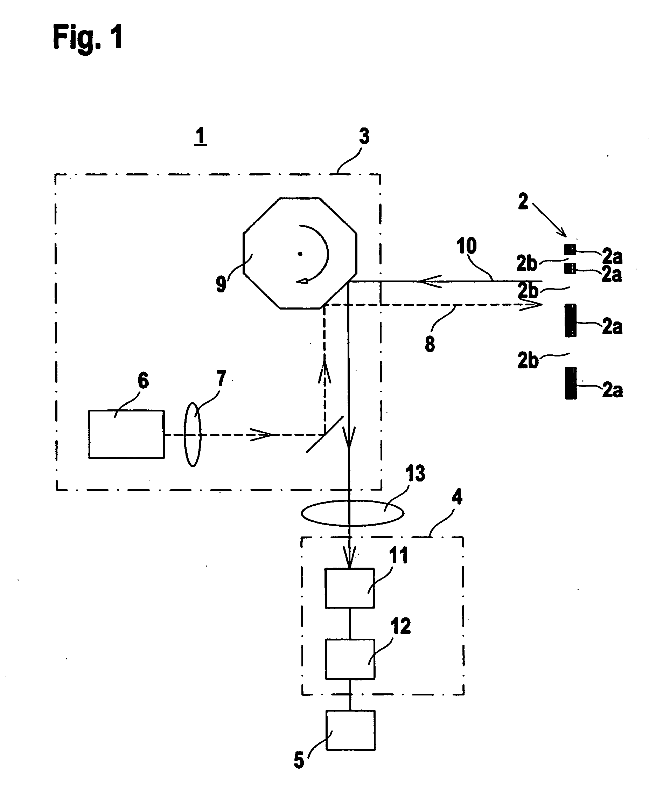

In Figur 1 ist der prinzipielle Aufbau einer als Barcodelesegerät ausgebildeten optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im vorliegenden Ausführungsbeispiel sind die Marken von Barcodes 2 gebildet. Die Barcodes 2 bestehen im wesentlichen aus einer Folge von schwarzen und weißen Strichelementen 2a, 2b definierter Länge und Breite.

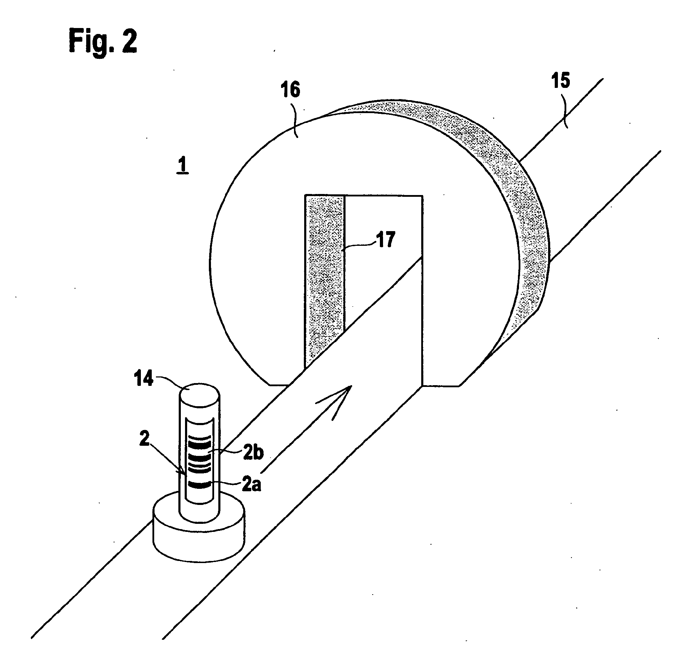

Die optoelektronische Vorrichtung 1 besteht im wesentlichen aus einem Sendeelement 3, einem Empfangselement 4 sowie einer Auswerteeinheit 5. Das Sendeelement 3 besteht aus einem Sender 6, vorzugsweise einer Laserdiode, sowie aus einer dem Sender 6 vorgeschalteten Sendeoptik 7 zur Fokussierung der Sendelichtstrahlen 8. Die fokussierten Sendelichtstrahlen 8 werden über die Ablenkeinheit 9, die im vorliegenden Ausführungsbeispiel von einem rotierenden Polygonspiegelrad gebildet ist, abgelenkt und über den zu detektierenden Barcode 2 geführt. Die Drehachse des Polygonspiegelrads ist senkrecht zur in Figur 2 dargestellten Äquatorialebene des Polygonspiegelrads angeordnet. Durch die Drehbewegung des Polygonspiegelrads werde die Sendelichtstrahlen 8 periodisch innerhalb eines vorgegebenen Winkelbereichs innerhalb der die Abtastebene bildenden Äquatorialebene geführt. Dabei können entsprechend der Fokussierung der Sendelichtstrahlen 8 Barcodes 2 in einem vorgegebenen Distanzbereich gelesen werden. Dieser Distanzbereich bildet den Lesebereich des Barcodelesegeräts.

Die vom Barcode 2 reflektierten Empfangslichtstrahlen 10 werden über das Polygonspiegelrad zum Empfangselement 4 geführt. Das Empfangselement 4 besteht aus einem Empfänger 11, der von einer Fotodiode gebildet ist und in dem die Empfangslichtstrahlen 10 in ein elektrisches Empfangssignal gewandelt werden. Dem Empfänger 11 ist ein Verstärker 12 nachgeschaltet. Zur Verbesserung der Nachweisempfindlichkeit ist dem Empfangselement 4 eine Empfangsoptik 13 vorgeschaltet.

Das am Ausgang des Empfangselements 4 anstehende Empfangssignal wird der Auswerteeinheit 5 zugeführt. Dort wird zur Rekonstruktion des Kontrastmusters des Barcodes 2 das Empfangssignal mit wenigstens einem Schwellwert bewertet.

Mit dem Barcodelesegerät gemäß Figur 1 werden die Sendelichtstrahlen 8 in einer Abtastebene geführt, so dass die Marken nur innerhalb eines begrenzten Lesebereichs innerhalb der Abtastebene erfassbar sind.

Die in den Figuren 2 - 4 dargestellte erfindungsgemäße optoelektronische Vorrichtung 1 ermöglicht eine Erfassung von Marken in einem räumlichen Erfassungsbereich, so dass Marken in unterschiedlicher räumlicher Orientierung zur optoelektronischen Vorrichtung 1 sicher erfasst werden können.

Die Objekte sind im vorliegenden Ausführungsbeispiel von Probenröhrchen 14 gebildet, die Proben von Blut, Urin, Serum oder dergleichen enthalten. Zur Identifizierung der Proben ist auf den Mantelflächen der Probenröhrchen 14 ein Barcode 2 aufgebracht, wobei dessen Strichelemente 2a, 2b, wie aus Figur 2 ersichtlich, in Längsrichtung der Probenröhrchen 14 hintereinander angeordnet sind und sich über einen vorgegebenen Winkelbereich in Umfangsrichtung der Mantelfläche des Probenröhrchens 14 erstrecken. Zudem können auf dem Pro-Mantelfläche des Probenröhrchens 14 erstrecken. Zudem können auf dem Probenröhrchen 14 weitere Kennzeichnungen vorgesehen sein.

Die Probenröhrchen 14 werden auf einer Fördereinrichtung transportiert, die beispielsweise von einem Förderband 15 gebildet ist. Dabei sind die Probenröhrchen 14 in Halterungen gelagert, so dass diese senkrecht stehend transportiert werden.

Erfindungsgemäß werden die Marken und vorzugsweise auch die weiteren Kennzeichnungen von der optoelektronischen Vorrichtung 1 während des Transports der Probenröhrchen 14 erfasst. Dabei können die Barcodes 2 und gegebenenfalls die weiteren Kennzeichnungen in beliebigen Winkelpositionen an der Mantelfläche der Probenröhrchen 14 angeordnet sein.

Wie insbesondere aus Figur 2 ersichtlich ist die optoelektronische Vorrichtung 1 in einem torbogenförmigen Gehäuse 16 integriert. Das Gehäuse 16 weist zwei Seitenschenkel auf, die beidseits des Förderbandes 15 angeordnet sind. Die Seitenschenkel und die anschließende Decke des Gehäuses 16 begrenzen einen Zwischenraum, in welchen die auf dem Förderband 15 transportierten Probenröhrchen 14 eingefahren werden. Dieser Zwischenraum entspricht im wesentlichen dem Erfassungsbereich, innerhalb dessen die Marken am Probenröhrchen 14 erkannt werden können. Der Zwischenraum weist einen im wesentlichen rechteckigen Querschnitt auf. Die Höhe des Zwischenraums ist an die Höhe der Probenröhrchen 14 angepasst. Die Breite des Zwischenraums entspricht im wesentlichen der Breite des Förderbandes 15. Die Ausdehnung des Gehäuses 16 in Längsrichtung des Förderbandes 15 ist größer als der Durchmesser der Probenröhrchen 14.

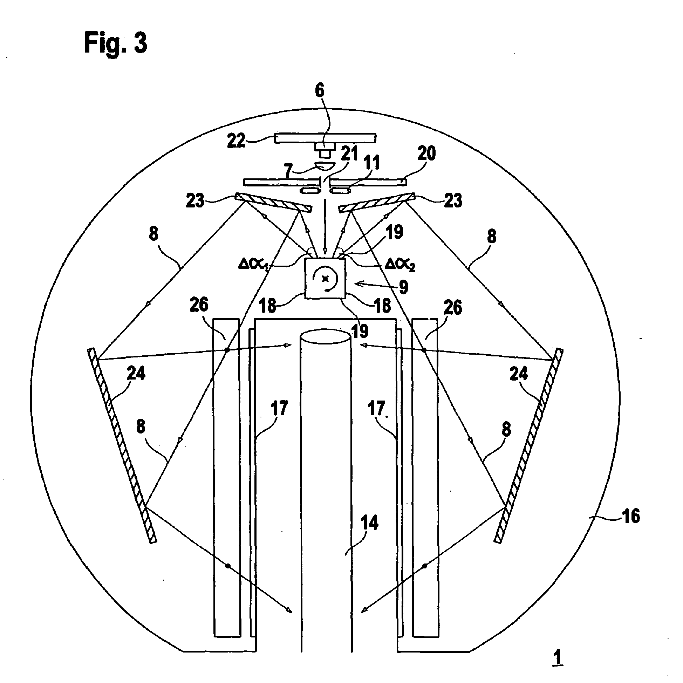

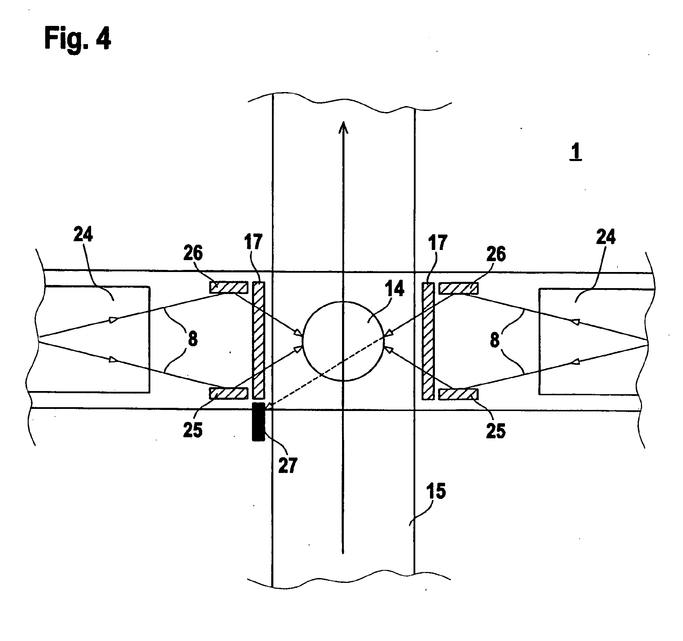

Während der Erfassung einer Marke auf einem Probenröhrchen 14 befindet sich dieses Probenröhrchen 14 vorzugsweise im Zentrum dieses Zwischenraums. Dies ist in den Figuren 3 und 4 dargestellt.

Die Strahlführung der Sendelichtstrahlen 8 ist dabei so gewählt, dass diese Austrittsfenster 17 an den Innenseiten der Seitenschenkel des Torbogens durchsetzen und in unterschiedlichen Einfallswinkeln auf die Oberfläche des Probenröhrchens 14 auftreffen, so dass ein Barcode 2 in beliebiger Winkelposition am Probenröhrchen 14 sicher erfasst werden kann.

Hierzu weist die optoelektronische Vorrichtung 1 zwei der Ablenkeinheit 9 nachgeordnete Umlenkeinheiten auf, wobei über die erste Umlenkeinheit Sendelichtstrahlen 8 durch das erste Austrittsfenster 17 von einer ersten Seite auf das Probenröhrchen 14 und über die zweite Umlenkeinheit Sendelichtstrahlen 8 durch das zweite Austrittsfenster 17 von einer zweiten Seite auf das Probenröhrchen 14 geführt sind.

Die einzelnen optischen Komponenten der optoelektronischen Vorrichtung 1 weisen dabei einen zur vertikal verlaufenden Symmetrieebene des Gehäuses 16 spiegelsymmetrischen Aufbau auf.

Die Ablenkeinheit 9 ist oberhalb des Zwischenraums im Bereich der Decke des Gehäuses 16 angeordnet und als Polygonspiegelrad mit vier Spiegelflächen bildenden Facetten 18, 19 ausgebildet. Die Drehachse des Polygonspiegelrads liegt in der Symmetrieebene des Gehäuses 16 und verläuft in horizontaler Richtung.

Oberhalb des Polygonspiegelrads ist eine erste Platine 20 mit einer zentralen Bohrung 21 und dem Empfänger 11 vorgesehen. Der Empfänger 11 ist beispielsweise von zwei beidseits der Bohrung 21 angeordneten Photodioden gebildet.

Oberhalb der ersten Platine 20 befindet sich eine zweite Platine 22 mit dem Sender 6. Die vom Sender 6 emittierten Sendelichtstrahlen 8 durchsetzen die Bohrung 21 in der ersten Platine 20 und treffen dann auf eine Facette 18 oder 19 des Polygonspiegelrads. Die am Polygonspiegelrad reflektierten Empfangslichtstrahlen 10 treffen auf den Empfänger 11.

Jede Umlenkeinheit weist einen zwischen Polygonspiegelrad und erster Platine 20 angeordneten ersten Umlenkspiegel 23 mit einer im wesentlichen horizontal verlaufenden Spiegelfläche auf.

Dem ersten Umlenkspiegel 23 ist ein zweiter Umlenkspiegel 24 mit geneigter Spiegelfläche nachgeordnet. Die Normalenvektoren der beiden Umlenkspiegel 23, 24 verlaufen in einer Ebene senkrecht zur Drehachse.

Dem zweiten Umlenkspiegel 24 sind ein dritter Umlenkspiegel 25 und ein vierter Umlenkspiegel 26 nachgeordnet. Diese Umlenkspiegel 25, 26 sind symmetrisch zur senkrecht zur Längsachse des Förderbandes 15 verlaufenden Symmetrieebene des zweiten Umlenkspiegels 24 in Abstand zueinander angeordnet. Dabei verlaufen die Spiegelflächen des dritten und vierten Umlenkspiegels 25, 26 parallel zueinander und zudem senkrecht zur Längsachse des Förderbandes 15.

Der dritte und vierte Umlenkspiegel 25, 26 befinden sich unmittelbar hinter dem Austrittsfenster 17, wobei jeweils ein Umlenkspiegel 25 oder 26 an den seitlichen Rand des Austrittsfensters 17 anschließt.

Die Höhen dieser Umlenkspiegel 25, 26 entsprechen der Höhe des Austrittsfensters 17, wobei dessen Höhe an die Abmessungen des Probenröhrchens 14 angepasst ist.

Die Breite des Austrittsfensters 17 entspricht im wesentlichen der Breite des zweiten Umlenkspiegels 24.

Die beiden Umlenkeinheiten bestehen somit jeweils aus vier Umlenkspiegeln 23, 24, 25, 26, wobei die Umlenkeinheiten symmetrisch zur Symmetrieachse des Gehäuses 16, in der die Drehachse des Polygonspiegelrads verläuft, angeordnet sind.

Von den am Polygonspiegelrad reflektierten Sendelichtstrahlen 8 wird infolge der Drehbewegung des Polygonspiegelrads ein bestimmter Winkelbereich Δα überstrichen, dessen Größe im wesentlichen durch die Anzahl der Facetten 18, 19 des Polygonspiegelrads vorgegeben ist.

Wie insbesondere aus Figur 3 ersichtlich werden innerhalb eines ersten Ausschnitts Δα₁ dieses Winkelbereichs Δα die Sendelichtstrahlen 8 über die Umlenkspiegel 23, 24, 25, 26 der ersten Umlenkeinheit geführt. Dementsprechend werden die Sendelichtstrahlen 8 in diesem Fall durch das diesen Umlenkspiegeln 23, 24, 25, 26 nachgeordnete Austrittsfenster 17 geführt, so dass die Sendelichtstrahlen 8 von einer ersten Seite auf das Probenröhrchen 14 treffen.

Innerhalb eines zweiten Ausschnitts Δα₂ des Winkelbereichs Δα werden die Sendelichtstrahlen 8 über die Umlenkspiegel 23, 24, 25, 26 der zweiten Umlenkeinheit geführt, Dementsprechend werden die Sendelichtstrahlen 8 in diesem Fall durch das zweite Austrittsfenster 17 von einer zweiten Seite auf das Probenröhrchen 14 geführt.

Durch die Drehbewegung des Polygonspiegelrads werden somit die Sendelichtstrahlen 8 alternierend über die erste und zweite Umlenkeinheit geführt, wodurch das Probenröhrchen 14 im Erfassungsbereich alternierend an gegenüberliegenden Seiten abgetastet wird.

Das Polygonspiegelrad weist vier Facetten 18, 19 mit ebenen Spiegelflächen auf, an welchen die Sendelichtstrahlen 8 reflektiert sind.

Für den Fall, dass die Normalenvektoren der Spiegelflächen jeweils senkrecht zur Drehachse des Polygonspiegelrads verlaufen, treffen die Sendelichtstrahlen 8 jeweils im rechten Winkel auf die Spiegelflächen der Facetten 18, 19, so dass sie über die Mitten des ersten und zweiten Umlenkspiegels 23, 24 geführt sind. Dann werden die Sendelichtstrahlen 8 am zweiten Umlenkspiegel 24 so abgelenkt, dass sie zwischen dem dritten und vierten Umlenkspiegel 25, 26 geführt sind, das Zentrum des Austrittsfensters 17 durchsetzen und dann in einer vorgegebenen Richtung auf das Probenröhrchen 14 treffen.

Dabei werden die Sendelichtstrahlen 8 jeweils innerhalb der Ausschnitte Δα₁ bzw. Δα₂ über die beiden Umlenkspiegel 23, 24 geführt. Durch die Drehbewegung des Polygonspiegelrads und die nachfolgenden Reflexionen am ersten und zweiten Umlenkspiegel 23, 24 werden dabei die Sendelichtstrahlen 8 in vertikaler Richtung entlang der Mantelfläche des Probenröhrchens 14 geführt.

Bei der erfindungsgemäßen optoelektronischen Vorrichtung 1 weist das Polygonspiegelrad eine alternierende Anordnung von zwei unterschiedlich zur Drehachse des Polygonspiegelrads geneigten Facetten 18, 19 auf. Die Neigungen der beiden unterschiedlichen Facetten 18, 19 sind dabei zweckmäßigerweise symmetrisch zur Äquatorialebene des Polygonspiegelrads ausgebildet. Dadurch wird erreicht, dass die Sendelichtstrahlen 8, die an unterschiedlich geneigten Facetten 18, 19 reflektiert werden, in einem vorgegebenen Aufrasterungswinkel zueinander verlaufen.

Dementsprechend werden die an den ersten Facetten 18 reflektierten Sendelichtstrahlen 8 über den ersten und zweiten Umlenkspiegel 23, 24 zum dritten Umlenkspiegel 25 geführt. Demgegenüber werden die an den zweiten Facetten 19 reflektierten Sendelichtstrahlen 8 über den ersten und zweiten Umlenkspiegel 23, 24 zum vierten Umlenkspiegel 26 geführt.

Die an dem dritten und vierten Umlenkspiegel 25, 26 reflektierten Sendelichtstrahlen 8 verlaufen etwa im rechten Winkel zueinander auf das Probenröhrchen 14 zu.

Durch die so ausgebildete Ablenkeinheit 9 und ihre nachgeordneten Umlenkeinheiten werden die Sendelichtstrahlen 8 aus vier verschiedenen Einfallrichtungen auf das Probenröhrchen 14 geführt, wobei in jeder Einfallrichtung das Probenröhrchen 14 durch die Sendelichtstrahlen 8 in vertikaler Richtung abgetastet wird. Der Barcode 2 weist eine relativ große Breite auf, so dass sich dieser über einen Winkelbereich von wenigstens 90° in Umfangsrichtung des Probenröhrchens 14 erstreckt. Damit kann der Barcode 2 mit der erfindungsgemäßen optoelektronischen Vorrichtung 1 unabhängig von seiner Orientierung im Erfassungsbereich sicher erkannt werden.

Wie aus Figur 3 ersichtlich ist im Bereich des Randes eines Austrittsfensters 17 ein Test-Barcode 27 vorgesehen.

Der Test-Barcode 27 an dem Austrittsfenster 17 ist dabei so angeordnet, dass dieser von den Sendelichtstrahlen 8 abgetastet wird, die über die gegenüberliegende Umlenkeinheit geführt sind.

Damit werden die über diese Umlenkeinheit geführten Sendelichtstrahlen 8 durch das gegenüberliegende Austrittsfenster 17 und den Erfassungsbereich zum Test-Barcode 27 geführt und von dort in derselben Richtung zurückreflektiert.

Damit kann der Test-Barcode 27 nur dann erfasst werden, wenn sich kein Objekt im Erfassungsbereich befindet.

Anhand der Nichtdetektion des Test-Barcodes 27 wird somit das Vorhandensein eines Objekts im Erfassungsbereich angezeigt. Anhand dieses Signals kann beispielsweise die Auswertung zur Erfassung der Barcodes 2 aktiviert werden. Eine weitere zusätzliche Sensorik zur Erfassung der Anwesenheit eines Objektes kann dadurch entfallen.

### Bezugszeichenliste

- (1): Optoelektronische Vorrichtung
- (2): Barcode
- (2a): Strichelement
- (2b): Strichelement
- (3): Sendeelement
- (4): Empfangselement
- (5): Auswerteeinheit
- (6): Sender
- (7): Sendeoptik
- (8): Sendelichtstrahlen
- (9): Ablenkeinheit
- (10): Empfangslichtstrahlen
- (11): Empfänger
- (12): Verstärker
- (13): Empfangsoptik
- (14): Probenröhrchen
- (15): Förderband
- (16): Gehäuse
- (17): Austrittsfenster
- (18): Facette
- (19): Facette
- (20): Platine
- (21): Bohrung
- (22): Platine
- (23): erster Umlenkspiegel
- (24): zweiter Umlenkspiegel
- (25): dritter Umlenkspiegel
- (26): vierter Umlenkspiegel
- (27): Test-Barcode

## Patentansprüche

1. Optoelektronische Vorrichtung zum Erkennen von auf Objekten angebrachten Marken mit einem Sendelichtstrahlen emittierenden Sender, einem Empfangslichtstrahlen empfangenden Empfänger, einer Auswerteeinheit und einer Ablenkeinheit, an welcher die Sendelichtstrahlen reflektiert und dadurch periodisch innerhalb eines vorgegebenen Winkelbereichs geführt sind, **dadurch gekennzeichnet, dass** die optoelektronische Vorrichtung (1) in einem torbogenförmigen Gehäuse (16) integriert ist, welches einen Erfassungsbereich seitlich und an seinem oberen Rand umschließt, wobei jeweils ein Austrittsfenster (17) an einer Innenseite der Seitenschenkel des Torbogens angeordnet ist, dass zur Erfassung der Marke das Objekt in den Erfassungsbereich einbringbar ist, und dass der Ablenkeinheit (9) wenigstens zwei stationäre Umlenkeinheiten nachgeordnet sind und so dass innerhalb eines ersten Ausschnitts Δα₁ des Winkelbereichs Δα die Sendelichtstrahlen (8) über die erste Umlenkeinheit durch ein erstes Austrittsfenster (17) von einer ersten Seite auf das Objekt geführt sind, und so einen ersten Ausschnitt des Erfassungsbereichs periodisch abtasten, und dass innerhalb eines zweiten Ausschnitts Δα₂ des Winkelbereichs Δα die Sendelichtstrahlen (8) über die zweite Umlenkeinheit durch das zweite Austrittsfenster (17) geführt sind und so einen zweiten Ausschnitt Erfassungsbereichs periodisch abtasten.

2. Optoelektronische Vorrichtung nach Anspruch 1, **dadurch gekennzeichnet, dass** die Objekte mittels einer Fördereinrichtung in den Erfassungsbereich einbringbar sind.

3. Optoelektronische Vorrichtung nach Anspruch 2, **dadurch gekennzeichnet, dass** die Fördereinrichtung durch ein Förderband (15) gebildet ist, auf dem Probenröhrchen (14) mit senkrecht zum Förderband verlaufenden Längsachsen stationär lagerbar sind.

4. Optoelektronische Vorrichtung nach Anspruch 3, **dadurch gekennzeichnet, dass** die Ablenkeinheit (9) von einem oberhalb des Erfassungsbereichs angeordneten Polygonspiegelrad gebildet ist, welches eine horizontal und in Richtung der Längsachse des Förderbands (15) verlaufende Drehachse und mehrere Spiegelflächen bildende Facetten (18, 19) aufweist.

5. Optoelektronische Vorrichtung nach Anspruch 4, **dadurch gekennzeichnet, dass** die Umlenkeinheiten jeweils eine Anordnung von Umlenkspiegeln (23, 24, 25, 26) aufweisen, wobei die Umlenkspiegel (23, 24, 25, 26) der beiden Umlenkeinheiten identisch ausgebildet und symmetrisch zur Längsachse des Förderbands (15) angeordnet sind.

6. Optoelektronische Vorrichtung nach einem der Ansprüche 4 oder 5, **dadurch gekennzeichnet, dass** jede Umlenkeinheit einen ersten und zweiten Umlenkspiegel (23, 24) aufweist, wobei die Normalenvektoren der Umlenkspiegel (23, 24) in einer Ebene senkrecht zur Drehachse des Polygonspiegelrads verlaufen und wobei die über die Umlenkspiegel (23, 24) geführten Sendelichtstrahlen (8) seitlich auf das Objekt geführt sind.

7. Optoelektronische Vorrichtung nach Anspruch 6, **dadurch gekennzeichnet, dass** dem zweiten Umlenkspiegel (24) ein dritter und vierter Umlenkspiegel (25) nachgeordnet sind, welche symmetrisch zu der senkrecht zur Längsachse des Förderbands (15) verlaufenden Symmetrieachse des zweiten Umlenkspiegels (24) in Abstand zueinander angeordnet sind, so dass erste Sendelichtstrahlen (8) über den dritten Umlenkspiegel (25) und zweite Sendelichtstrahlen (8) über den vierten Umlenkspiegel (26) in verschiedenen Einfallwinkeln auf das Objekt geführt sind.

8. Optoelektronische Vorrichtung nach Anspruch 7, **dadurch gekennzeichnet, dass** die Ebenen der Spiegelflächen des dritten und vierten Umlenkspiegels (25, 26) parallel zueinander und senkrecht zur Längsachse des Förderbands (15) verlaufen.

9. Optoelektronische Vorrichtung nach einem der Ansprüche 7 oder 8, **dadurch gekennzeichnet, dass** der Abstand zwischen dem dritten und vierten Umlenkspiegel (25, 26) im wesentlichen der Breite des zweiten Umlenkspiegels (24) entspricht.

10. Optoelektronische Vorrichtung nach einem der Ansprüche 7-9, **dadurch gekennzeichnet, dass** das Polygonspiegelrad eine alternierende Anordnung von zwei unterschiedlich zu dessen Drehachse geneigten Facetten (18, 19) aufweist, wobei die an den ersten Facetten (18) reflektierten Sendelichtstrahlen (8) die ersten Sendelichtstrahlen (8) bilden, und wobei die an den zweiten Facetten (19) reflektierten Sendelichtstrahlen (8) die zweiten Sendelichtstrahlen (8) bilden.

11. Optoelektronische Vorrichtung nach einem der Ansprüche 7-10, **dadurch gekennzeichnet, dass** der dritte und vierte Umlenkspiegel (25, 26) hinter einem Austrittsfenster (17) angeordnet ist, welches seitlich an das Förderband (15) anschließt und senkrecht zur horizontalen Ebene des Förderbands (15) ausgerichtet ist.

12. Optoelektronische Vorrichtung nach einem der Ansprüche 11 oder 12, **dadurch gekennzeichnet, dass** an wenigstens einem Austrittsfenster (17) seitlich ein Reflektor mit einem Test-Barcode (27) angeordnet ist, auf welchen die über die auf der gegenüberliegenden Seite des Förderbands (15) angeordnete Umlenkeinheit geführten Sendelichtstrahlen (8) nur dann geführt sind, wenn kein Objekt im Überwachungsbereich angeordnet ist.

13. Optoelektronische Vorrichtung nach Anspruch 12, **dadurch gekennzeichnet, dass** in der Auswerteeinheit (5) die Auswertung zur Erfassung der Barcodes (2) auf dem Objekt bei Nichterkennen des Test-Barcodes (27) aktiviert wird.

## Claims

1. Optoelectronic device for recognition of marks applied to objects, comprising a transmitter emitting transmitted light beams, a receiver receiving received light beams, an evaluating unit and a deflecting unit, at which the transmitted light beams are reflected and thereby periodically guided within a predetermined angular range, **characterised in that** the optoelectronic device (1) is integrated in an archway-shaped housing (16) which encloses a detection region laterally and at its upper edge, wherein a respective outlet window (17) is arranged at an inner side of each of the side limbs of the archway, that for detection of the marks the object can be brought into the detection region and that at least two stationary diverting units are arranged downstream of the deflecting unit (9) and so that within a first segment Δα₁ of the angular range Δα the transmitted light beams (8) are guided via the first diverting unit through a first outlet window (17) from a first side onto the object and thus periodically scan a first segment of the detection range and that within a second segment Δα₂ of the angular range Δα the transmitted light beams (8) are guided via the second diverting unit through the second outlet window (17) and thus periodically scan a second segment of the detection range.

2. Optoelectronic device according to claim 1, **characterised in that** the objects can be brought into the detection range by means of a conveying device.

3. Optoelectronic device according to claim 2, **characterised in that** the conveying device is formed by a conveyor belt 15, on which sample tubelets (14) with longitudinal axes extending perpendicularly to the conveyor belt can be mounted to be stationary.

4. Optoelectronic device according to claim 3, **characterised in that** the deflecting unit (9) is formed by a polygon mirror wheel which is arranged above the detecting region and which has a rotational axis, which extends horizontally and in the direction of the longitudinal axis of the conveyor belt (15), and several facets (18, 19) forming mirror surfaces.

5. Optoelectronic device according to claim 4, **characterised in that** the diverting units each comprise an arrangement of diverting mirrors (23, 24, 25, 26), wherein the diverting mirrors (23, 24, 25, 26) of the two diverting units are of identical construction and arranged symmetrically with respect to the longitudinal axis of the conveyor belt (15).

6. Optoelectronic device according to one of claims 4 and 5, **characterised in that** each diverting unit comprises a first and a second diverting mirror (23, 24), wherein the normal vectors of the diverting mirror (23, 24) extend in a plane perpendicular to the axis of rotation of the polygon mirror wheel and wherein the transmitted light beams (8) guided by way of the diverting mirrors (23, 24) are laterally guided onto the object.

7. Optoelectronic device according to claim 6, **characterised in that** a third and fourth diverting mirror (25) are arranged downstream of the second diverting mirror (24), which third and fourth diverting mirrors are arranged at a spacing from one another symmetrically with respect to the axis of symmetry, which extends perpendicularly to the longitudinal axis of the conveyor belt (15), of the second diverting mirror (24) so that first transmitted light beams (8) are guided via the third diverting mirror (25) and second transmitted light beams (8) via the fourth diverting mirror (26) onto the object at different angles of incidence.

8. Optoelectronic device according to claim 7, **characterised in that** the planes of the mirror surfaces of the third and fourth diverting mirrors (25, 26) extend parallel to one another and perpendicularly to the longitudinal axis of the conveyor belt (15).

9. Optoelectronic device according to one of claims 7 and 8, **characterised in that** the spacing between the third and fourth diverting mirrors (25, 26) substantially corresponds with the width of the second diverting mirror (24).

10. Optoelectronic device according to any one of claims 7 to 9, **characterised in that** the polygon mirror wheel has an alternating arrangement of two facets (18, 19) with different inclination relative to the axis of rotation of the wheel, wherein the transmitted light beams (8) reflected at the first facets (18) form the first transmitted light beams (8) and wherein the transmitted light beams (8) reflected at the second facets (19) form the second transmitted light beams (8).

11. Optoelectronic device according to any one of claims 7 to 10, **characterised in that** the third and fourth deflecting mirrors (25, 26) are arranged behind an outlet window (17) which laterally adjoins the conveyor belt (15) and is oriented perpendicularly to the horizontal plane of the conveyor belt (15).

12. Optoelectronic device according to one of claims 11 and 12, **characterised in that** laterally arranged at at least one outlet window (17) is a reflector with a test barcode (27) onto which the transmitted light beams (8), which are guided by way of the diverting unit arranged on the opposite side of the conveyor belt (15), are guided only when no object is arranged in the monitoring region.

13. Optoelectronic device according to claim 12, **characterised in that** the evaluation for detection of the barcode (2) on the object is activated in the evaluating unit (5) on non-recognition of the test barcode (27).

## Revendications

1. Dispositif optoélectronique pour la détection de marques appliquées sur des objets, comprenant un émetteur émettant des rayons lumineux d'émission, un récepteur recevant des rayons lumineux de réception, une unité d'évaluation et une unité de déflexion sur laquelle les rayons lumineux d'émission sont réfléchis et de ce fait guidés périodiquement à l'intérieur d'une zone angulaire prédéfinie, **caractérisé en ce que** le dispositif optoélectronique (1) est intégré dans un boîtier en forme d'arceau ou d'arche (16), lequel entoure une zone de saisie latéralement et par son bord supérieur, une fenêtre de sortie (17) étant disposée sur un côté intérieur de chacune des branches latérales de l'arceau, que pour la saisie de la marque l'objet peut être amené dans la zone de saisie, et qu'au moins deux unités de déviation stationnaires sont disposées à la suite de l'unité de déflexion (9) et qu'à l'intérieur d'un premier secteur Δα₁ de la zone angulaire Δα les rayons lumineux d'émission (8) sont guidés sur l'objet depuis un premier côté par la première unité de déviation à travers une première fenêtre de sortie (17) et balayent ainsi périodiquement un premier secteur de la zone de saisie, et qu'à l'intérieur d'un deuxième secteur Δα₂ de la zone angulaire Δα les rayons lumineux d'émission (8) sont guidés par la deuxième unité de déviation à travers la deuxième fenêtre de sortie (17) et balayent ainsi périodiquement un deuxième secteur de la zone de saisie.

2. Dispositif optoélectronique selon la revendication 1, **caractérisé en ce que** les objets peuvent être amenés dans la zone de saisie au moyen d'un équipement de transport.

3. Dispositif optoélectronique selon la revendication 2, **caractérisé en ce que** l'équipement de transport est formé par une bande transporteuse (15) sur laquelle des tubes à échantillon (14) dont les axes longitudinaux s'étendent perpendiculairement à la bande transporteuse peuvent être placés de manière stationnaire.

4. Dispositif optoélectronique selon la revendication 3, **caractérisé en ce que** l'unité de déflexion (9) est formée par une roue à miroir polygonal disposé au-dessus de la zone de saisie, laquelle présente un axe de rotation s'étendant horizontalement et en direction de l'axe longitudinal de la bande transporteuse (15) et plusieurs facettes (18, 19) formant des surfaces réfléchissantes.

5. Dispositif optoélectronique selon la revendication 4, **caractérisé en ce que** les unités de déviation présentent chacune un agencement de miroirs de déviation (23, 24, 25, 26), les miroirs de déviation (23, 24, 25, 26) des deux unités de déviation étant de conception identique et disposés symétriquement par rapport à l'axe longitudinal de la bande transporteuse (15).

6. Dispositif optoélectronique selon l'une des revendications 4 ou 5, **caractérisé en ce que** chaque unité de déviation présente un premier et un deuxième miroirs de déviation (23, 24), les vecteurs normaux aux miroirs de déviation (23, 24) s'étendant dans un plan perpendiculairement à l'axe de rotation de la roue à miroir polygonal et les rayons lumineux d'émission (8) guidés par les miroirs de déviation (23, 24) étant guidés latéralement sur l'objet.

7. Dispositif optoélectronique selon la revendication 6, **caractérisé en ce qu'**à la suite du deuxième miroir de déviation (24) sont disposés un troisième et quatrième miroirs de déviation (25) qui sont disposés à distance l'un de l'autre, symétriquement par rapport à l'axe de symétrie du deuxième miroir de déviation (24) s'étendant perpendiculairement à l'axe longitudinal de la bande transporteuse (15), de façon que des premiers rayons lumineux d'émission (8) soient guidés par le troisième miroir de déviation (25) et des deuxièmes rayons lumineux d'émission (8) par le quatrième miroir de déviation (26) avec des angles d'incidence différents sur l'objet.

8. Dispositif optoélectronique selon la revendication 7, **caractérisé en ce que** les plans des surfaces réfléchissantes des troisième et quatrième miroirs de déviation (25, 26) sont parallèles entre eux et s'étendent perpendiculairement à l'axe longitudinal de la bande transporteuse (15).

9. Dispositif optoélectronique selon l'une des revendications 7 ou 8, **caractérisé en ce que** la distance entre les troisième et quatrième miroirs de déviation (25, 26) correspond essentiellement à la largeur du deuxième miroir de déviation (24).

10. Dispositif optoélectronique selon l'une des revendications 7 à 9, **caractérisé en ce que** la roue à miroir polygonal présente une disposition alternée de deux facettes (18, 19) inclinées différemment par rapport à son axe de rotation, les rayons lumineux d'émission (8) réfléchis sur les premières facettes (18) formant les premiers rayons lumineux d'émission (8) et les rayons lumineux d'émission (8) réfléchis sur les deuxièmes facettes (19) formant les deuxièmes rayons lumineux d'émission (8).

11. Dispositif optoélectronique selon l'une des revendications 7 à 10, **caractérisé en ce que** les troisième et quatrième miroirs de déviation (25, 26) sont disposés derrière une fenêtre de sortie (17) qui fait suite latéralement à la bande transporteuse (15) et est orientée perpendiculairement au plan horizontal de la bande transporteuse (15).

12. Dispositif optoélectronique selon l'une des revendications 11 ou 12, **caractérisé en ce que** sur au moins une fenêtre de sortie (17) est disposé latéralement un réflecteur avec un code barres de test (27) sur lequel les rayons lumineux d'émission (8) guidés par l'unité de déviation disposée du côté opposé de la bande transporteuse (15) ne sont guidés que si aucun objet n'est disposé dans la zone de surveillance.

13. Dispositif optoélectronique selon la revendication 12, **caractérisé en ce que** l'évaluation pour la saisie des codes barres (2) sur l'objet est activée dans l'unité d'évaluation (5) en cas de non-détection du code barres de test (27).
